# EUROPEAN PATENT SPECIFICATION

(11) **EP 0 905 686 B1**
(45) Date of publication and mention of the grant of the patent: **22.03.2006**
(21) Application number: 98118059.9
(22) Date of filing: 23.09.1998
(51) Int. Cl.: G11B 15/68, G11B 17/22

(54) **Improved structure of stocker apparatus for storage medium**
Verbesserte Aufbewahrungsstruktur für Speichermedium
Structure améliorée d'un dispositif de stockage de moyen de mémorisation

(30) Priority: 24.09.1997 JP 25904697
(43) Date of publication of application: 31.03.1999
(73) Proprietor: VICTOR COMPANY OF JAPAN, LTD., Yokohama 221-0022 (JP)
(72) Inventor: Yamanaka, Akira, Yokohama (JP); Shibuya, Naoki, Takasaki-chi, Gunma-ken (JP); Yomogida, Yasukazu, Sagamihara-shi, Kanagawa-ken (JP); Nishikawa, Kouichiro, Sagamihara-shi, Kanagawa-ken (JP); Adachi, Kengo, Sagamihara-shi, Kanagawa-ken (JP); Shintani, Isao, Maebashi-shi, Gumma-ken (JP)
(74) Representative: TBK-Patent

(56) References cited:
- EP-A- 0 063 894
- EP-A- 0 215 767
- DE-A- 2 929 172
- US-A- 5 432 654

## Description

### BACKGROUND OF THE INVENTION

### 1 Technical Field of the Invention

The present invention relates generally to a stocker apparatus designed to stock a plurality of storage media such as minidisk (minidisc, MD) cartridges, compact disks (compact discs, CDs), digital video disks (digital video discs, DVDs), or tape cassettes.

### 2 Background of Related Art

Japanese Patent First Publication No. 7-176126 teaches a conventional minidisk exchanging device with a cartridge transport mechanism which has a plurality of cartridge holders disposed to overlap each other and transports selected one of minidisk cartridges stocked in the cartridge holders to a playback station. When each minidisk cartridge is ejected from one of the cartridge holders, an eject button installed on a front panel is pushed to project the minidisk cartridge partially from the front panel, allowing the user to grasp the minidisk cartridge for withdrawal. The amounts of projection of the minidisk cartridges from the front panel are the same. The minidisk cartridges are laid to overlap each other with small intervals. It is, thus, easy to project only one of the minidisk cartridges from the front panel to withdraw it manually, but it is difficult to withdraw some of the minidisk cartridges simultaneously projected from the front panel.

Such a minidisk exchanging device is usually equipped with a loading error detecting mechanism designed to detect loading errors of minidisk cartridges independently. When a plurality of minidisk cartridges are loaded into cartridge holders simultaneously, the independent detection of a loading error of each minidisk cartridge is not always needed. It is advisable to detect loading errors of some or all of the minidisk cartridges together.

### SUMMARY OF THE INVENTION

A generic stocker apparatus according to the preamble of claim 1 is disclosed in the US 5,432,654.

It is an object of the invention to provide an improved stocker apparatus such that it facilitates the withdrawal of cartridges from the front panel.

According to the invention, this object is solved with a stocker apparatus having the features of the new claim 1.

Preferable embodiments of the invention are laid down in the dependent claims 2 to 7.

### BRIEF DESCRIPTION OF THE DRAWINGS

The present invention will be understood more fully from the detailed description given hereinbelow and from the accompanying drawings of the preferred embodiment of the invention, which, however, should not be taken to limit the invention to the specific embodiment but are for explanation and understanding only.

In the drawings:
Fig. 1 is a perspective view which shows a storage medium stocker according to the present invention;
Fig. 2 is an exploded view which shows the storage medium stocker in Fig. 1;
Fig. 3(a) is an exploded view which shows a stocker tray;
Fig. 3(b) is a partially perspective view which shows two stocker trays disposed below the one shown in Fig. 3(a);
Fig. 4 is a plan view which shows a stocker tray;
Fig. 5 is a side view which shows a door unit;
Fig. 6 is an exploded view which shows a loading error detecting mechanism;
Fig. 7 is a plan view which shows a drive mechanism actuating stocker trays and a shutter;
Fig. 8 is a plan view which shows an neutral position of the drive mechanism of Fig. 7;
Fig. 9 is a plan view which shows a position of a drive mechanism following the initial position in Fig. 8;
Fig. 10 is a plan view which shows a position of a drive mechanism following the position in Fig. 9;
Fig. 11 is a plan view which shows a position of a drive mechanism following the position in Fig. 10;
Fig. 12 is a plan view which shows a loading position of a stocker tray which allows an MD (minidisc) cartridge to be loaded into a minidisk reproduction device;
Fig. 13(a) is a side view which shows an initial position of a stocker mechanism;
Fig. 13(b) is a side view of the stocker mechanism of Fig. 13(a) from which a right side chassis is omitted;
Fig. 14(a) is a side view which shows a position of a stocker mechanism following the initial position in Fig. 13(a);
Fig. 14(b) is a side view of the stocker mechanism of Fig. 14(a) from which a right side chassis is omitted;
Fig. 15(a) is a side view which shows a position of a stocker mechanism following the position in Fig. 14(a);
Fig. 15(b) is a side view of the stocker mechanism of Fig. 15(a) from which a right side chassis is omitted;
Fig. 16(a) is a side view which shows the frontmost position of a stocker mechanism wherein a base frame reaches a cartridge loading/unloading position which allows MD cartridges to be loaded into or unloaded from stocker trays;
Fig. 16(b) is a side view of the stocker mechanism of Fig. 16(a) from which a right side chassis is omitted;
Fig. 17(a) is a side view which shows the rearmost position of a stocker mechanism wherein a base frame reaches a loading position which allows MD cartridges to be withdrawn from stocker trays into a minidisk reproduction device;
Fig. 17(b) is a side view of the stocker mechanism of Fig. 17(a) from which a right side chassis is omitted;
Figs. 18(a) and 18(b) are plan views which show a stocker tray into which an MD cartridge is loaded at a correct orientation;
Figs. 19(a) and 19(b) are plan views which show a stocker tray into which an MD cartridge is loaded at incorrect orientations;
Fig. 20 is a plan view which shows the state of a loading error detecting mechanism when an MD cartridge is being loaded at a correct orientation into a stocker tray in a cartridge loading/unloading position;
Fig. 21 (a) is a plan view which shows the state of a loading error detecting mechanism when an MD cartridge reaches a standby position after loaded into a stocker tray;
Fig. 21 (b) is a partially perspective view of the loading error detecting mechanism of Fig. 21 (a);
Fig. 22 is a plan view which shows the state of a loading error detecting mechanism when an MD cartridge is turned 90° counterclockwise in error and loaded into a stocker tray;
Fig. 23(a) is a plan view which shows the state of a loading error detecting mechanism when an MD cartridge reaches a standby position after loaded into the stocker tray at the incorrect orientation in Fig. 22; and
Fig. 23(b) is a partially perspective view of the loading error detecting mechanism in Fig. 23(a).

### DESCRIPTION OF THE PREFERRED EMBODIMENT

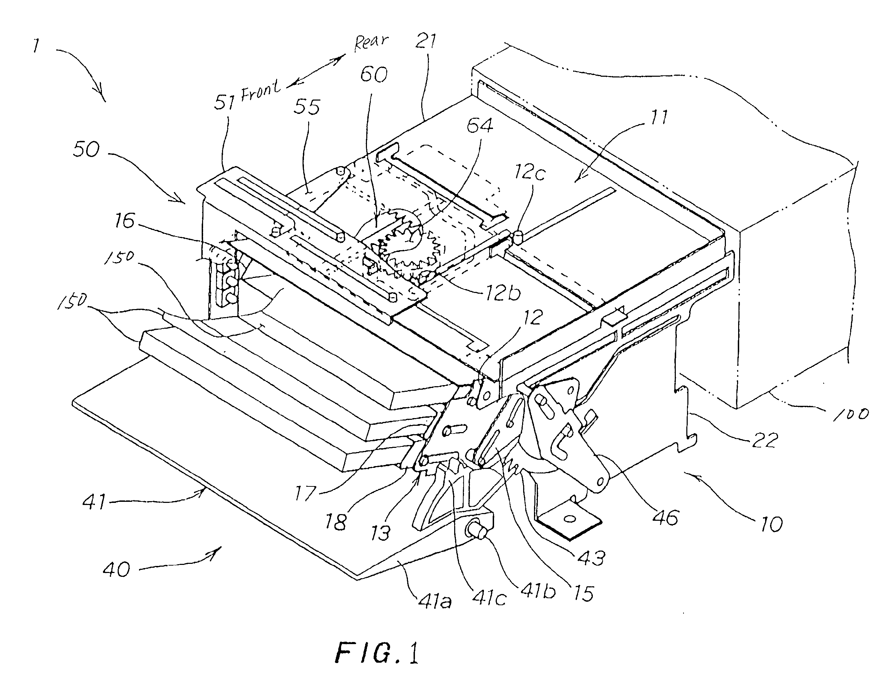

Referring now to the drawings, particularly to Fig. 1, there is shown a storage medium stocker 1 according to the invention which is mounted on, for example, the front of the minidisk reproduction device 100 as represented by a two-dot chain line.

The storage medium stocker 1 includes generally the stocker mechanism 10, the door unit 40, the loading error detecting mechanism 50, and the drive mechanism 60. The stocker mechanism 10 is designed to hold a plurality of minidisk (MD) cartridges 150 so as to be overlaid with each other. The door unit 40 covers the front of the stocker mechanism 10. The loading error detecting mechanism 50 is installed in front of the shocker mechanism 10 to detect a failure in loading of each MD cartridge 150. The drive mechanism 60 is designed to move the base frame 12 back and forth relative to the chassis 11 of the stocker mechanism 10 and to move the shutter 51 of the loading error detecting mechanism 50 laterally.

In operation, as will be discussed later in detail, one of the MD cartridges 150 held in first to third stocker trays 16 to 18 of the storage medium stocker 1 is selectively loaded into the minidisk reproduction device 100 to record or read information signals on and out of it. The minidisk reproduction device 100 is so designed that a loader can be moved up and down to pick up the selected one of the MD cartridges 150 from corresponding one of the first to third stocker trays 16 to 18.

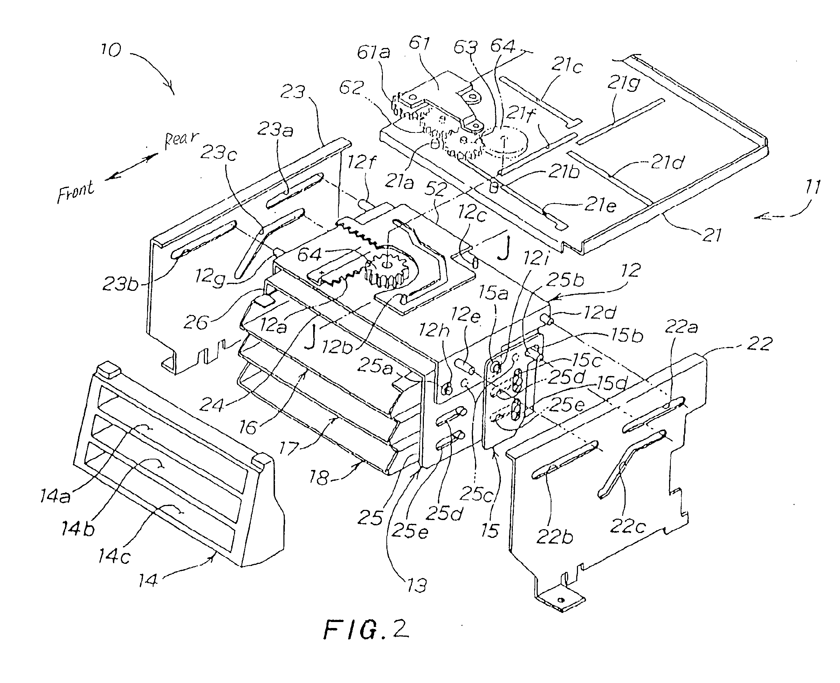

The stocker mechanism 10, as clearly shown in Fig. 2, includes the chassis 11, the base frame 12, sub-frame 13, the partition cover 14, the cam plates 15, and the first to third stocker trays 16 to 18. The chassis 11 consists of side chassis 22 and 23 extending in parallel and the upper chassis 21 disposed over the side chassis 22 and 23. The base frame 12 is disposed in the chassis 11 so as to be slidable in a loading direction of the MD cartridges 150. The sub-frames 13 is retained pivotably by the base frame 12. The partition cover 14 is installed on the sub-frame 13 to cover a front open end thereof. The cam plates 15 are mounted on right and left outer side walls of the base frame 12 (only one is shown for the brevity of illustration). The first to third stocker trays 16 to 18 are retained by the right and left side walls of the sub-frame 13 so as to overlap each other vertically. Specifically, the first stocker tray 16 is fixed near the upper wall of the sub-frame 13, while the second and third stocker trays 17 and 18 are disposed slidably in parallel to the first stocker tray 16.

The chassis 11, as described above, consists of the side chassis 22 and 23 and the upper chassis 21. The upper chassis 21 has mounted thereon pins 21a and 21 b for installation of the loading error detecting mechanism 50 as shown in Fig. 1 and also has formed therein grooves 21c, 21d, and 21e for guiding lateral movement of the drive plate 52 which actuates the loading error detecting mechanism 50 and grooves 21f and 21g along which pins 12b and 12c installed on the upper wall of the base frame 12 slide to move the base frame 12 longitudinally.

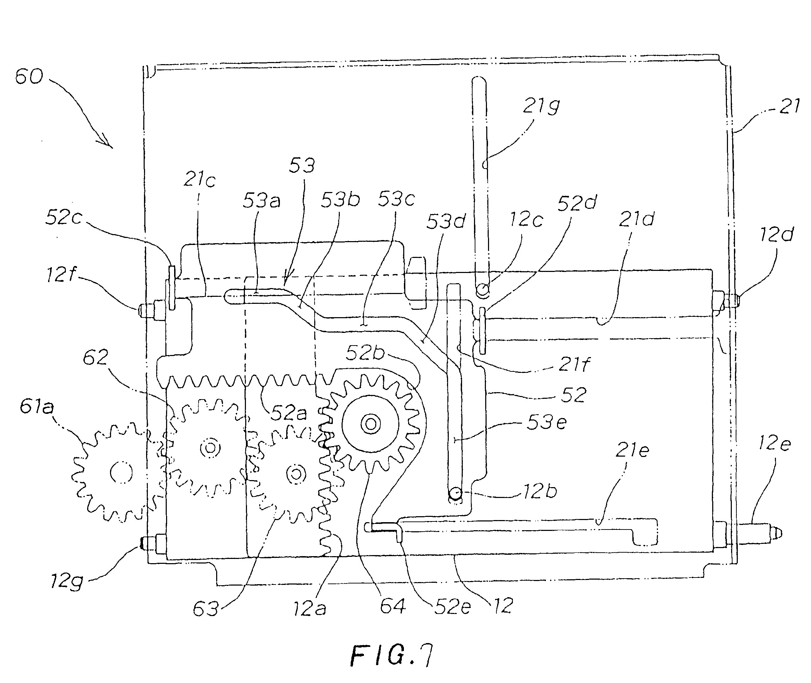

The upper chassis 21 has, as clearly shown in Figs. 1 and 7, also mounted on the back surface thereof a set of gears 61a, 62, 63, and 64 which make up the drive mechanism 60 as will be described later in detail.

The side chassis 22 has formed therein the grooves 22a and 22b extending in alignment with each other and the cam groove 22c. The grooves 22a and 22b guide longitudinal movement of the pins 12d and 12e installed on the side wall of the base frame 12. The cam groove 22c controls movement of the pin 25b installed on a rear end portion of the side plate 25 of the sub-frame 13 for swinging the sub-frame 13, as will be discussed later in detail.

The side chassis 23 is the mirror image of the chassis 22. Specifically, the side chassis 23 has formed therein grooves 23a and 23b for sliding the base frame 12 and the cam groove 23c for swinging the sub-frame 13.

The base frame 12 has the pinion 64 secured on the upper surface, a pair of pins 12b and 12c mounted on the upper surface longitudinally, a pair of pins 12d and 12e mounted on the right side surface, a pair of pins 12f and 12g mounted on the left side surface, a pair of holes 12h (only one is shown) formed in the both side surfaces, and a pair of pins or pivots 12i (only one is shown) mounted on the both side surfaces. The rack 63 extends longitudinally, i.e., parallel to the center line J-J and meshes with the pinion 64 of the drive mechanism 60 disposed on the reverse surface of the upper chassis 21 to move the base frame 12 longitudinally. The pins 12b and 12c engage the grooves 21f and 21g formed in the upper chassis 21. The pin 12b engages a cam groove formed in the plate 52 of the loading error detecting mechanism 50 as will be described later in detail. The pins 12d and 12e engage the grooves 22a and 22b formed in the right side chassis 22. Similarly, the pins 12f and 12g engage the grooves 23a and 23b formed in the left side chassis 23. The holes 12h receive the pivots 25a (only one is shown) mounted on front portions of side surfaces of the sub-frame 13 to allow the sub-frame 13 to rotate about the pivots 25a. The pivots 12i supports the cam plates 15 rotatably.

The sub-frame 13 consists of the upper plate 24 and right and left side plates 25 and 26 extending downward from both sides of the upper plate 24.

The side plate 25 has the pivot 25a engaging the hole 12h of the base frame 12, the pin 25b for allowing the swing of the cam plate 15, a pair of circular holes 25c for securing the first stocker tray 16 rigidly, a pair of elongated holes 25d for guiding sliding movement of the second stocker tray 17, and a pair of elongated holes 25e for guiding sliding movement of the third stocker tray 18.

The side plates 26 is the mirror image of the side plate 25, and explanation thereof in detail will be omitted here.

The partition cover 14 is, as described above, attached to the front of the sub-frame 13 and has first, second, and third loading openings 14a, 14b, and 14c formed parallel to each other for loading the MD cartridges 150 into the first, second, and third stocker trays 16, 17, and 18, respectively.

The cam plate 15 mounted on the right side wall of the base frame 12 has the hole 15a into which the pivot 12i of the base frame 12 is inserted, the horizontally elongated hole 15b into which the pin 25b of the right side plate 25 of the sub-frame 13 is inserted, and a pair of vertically elongated holes 15c and 15d for guiding longitudinal movement of the second and third stocker trays 17 and 18, respectively. The cam plate 15 mounted on the left side wall of the base frame 12 has a similar structure, and explanation thereof in detail will be omitted here.

The base frame 12, the sub-frame 13, the partition cover 14, and the first to third stocker trays 16 to 18 are, as will be discussed later in detail, moved within the chassis 11 from a standby position to a front cartridge loading/unloading position and a rear loading position.

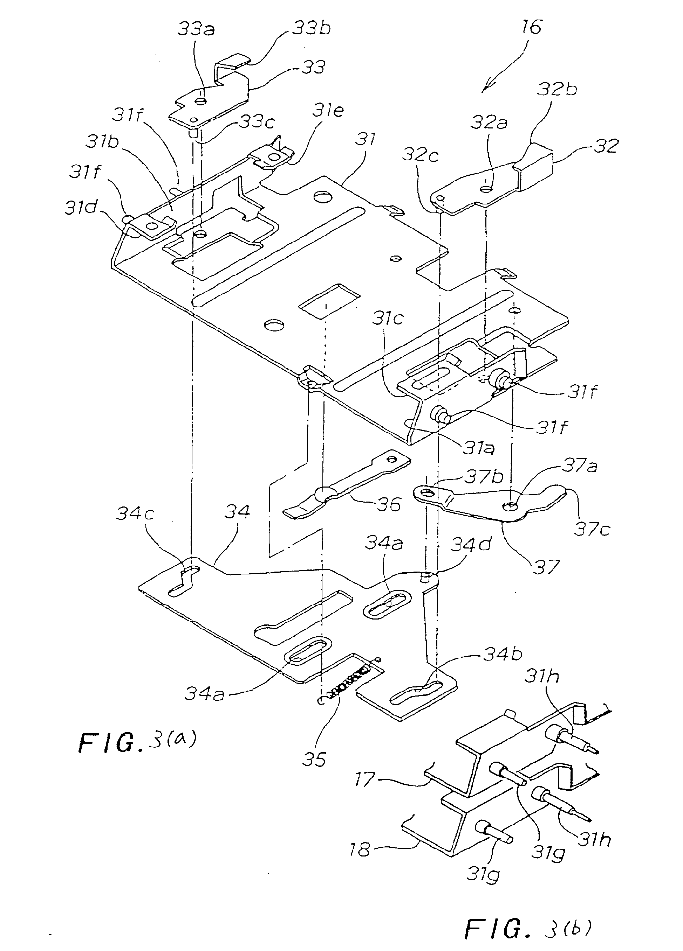

The first stocker tray 16, as clearly shown in Fig. 3(a), consists of the tray body 31, right and left lock levers 32 and 33 pivotably mounted on upper surfaces of side walls extending vertically from both sides of the tray body 31, the slide plate 34 slidably mounted on the reverse surface of the tray body 31 in connection with the lock levers 32 and 33, the tension spring 35 stretched between the slide plate 34 and the tray body 31, the pressure bar (leaf) spring 36 producing the pressure to hold the MD cartridge 150 within the tray body 31 (see Fig. 1), and the release lever 37 mounted on a rear portion of the reverse surface of the tray body 31 in connection with the slide plate 34.

The tray body 31 has guide surfaces 31a and 31b formed on the side walls thereof for guiding movement of both sides of the MD cartridge 150, the upper guide surface 31c continuing from the guide surface 31a, upper guide surfaces 31d and 31e continuing from the guide surface 31b, and two pairs of pins 31f installed on outer surfaces of the side walls, inserted into the circular holes 25c of the side plates 25 and 26 of the sub-frame 13, respectively.

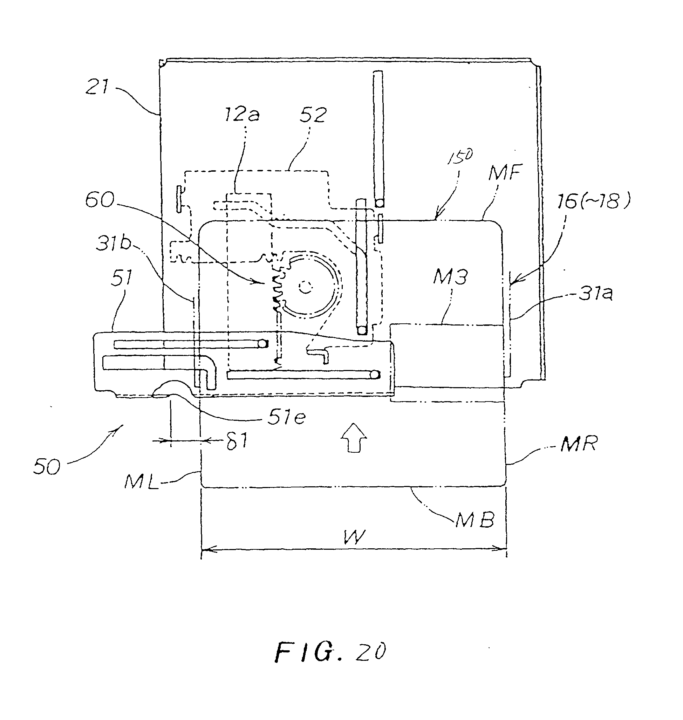

The width of the tray body 31 (i.e., the distance between the guide surfaces 31a and 31b) is so determined as to allow smooth insertion of the MD cartridge whose width W, as shown in Fig. 18(a), is 71.4 mm without any play. Specifically, the guide surfaces 31a and 31b of the tray body 31 serve to orient loading and unloading movement of the MD cartridge 150 along a predetermined loading/unloading direction.

The depth D (= 68 mm), as shown in Fig. 18(a), of the MD cartridge 150 is slightly shorter than the width W (= 71.4 mm). Therefore, if the MD cartridge 150 is loaded in error with the front and the back thereof facing the guide surfaces 31a and 31b, it will cause the play to be developed between the MD cartridge 150 and the guide surfaces 31a and 31b. This loading error is, as discussed later in detail, detected by the loading error detecting mechanism 50.

The right lock lever 32 has the hole 32a for attachment to the tray body 31, the hook 32b locking the MD cartridge 150, and a pin or cam follower 32c inserted into the cam groove 34b formed in the slide plate 34.

Similarly, the left lock lever 33 has the hole 33a for attachment to the tray body 31, the hook 33b locking the MD cartridge 150, and a pin or cam follower 33c inserted into the cam groove 34c formed in the slide plate 34.

The lock levers 32 and 33 serve to hold the MD cartridge 150 in a preselected position in the first stocker tray 16.

The slide plate 34 has a pair of holes 34a elongated longitudinally in alignment with each other, the cam groove 34b for guiding movement of the right lock lever 32, and the cam groove 34c for guiding movement of the left lock lever 33, and the pin 34d connected to the release lever 37. The holes 34a engage protrusions (not shown) formed on the reverse surface of the tray body 31, respectively, for guiding longitudinal movement of the slide plate 34.

The release lever 37 has the hole 37a for pivotal attachment to the reverse surface of the tray body 31, the elongated hole 37b into which the pin 34d of the slide plate 34 is inserted, and the extension 37c which is brought in operation into contact with the minidisk reproduction device 100.

The second and third stocker trays 17 and 18 have substantially the same structure as that of the first stocker tray 16 except that the pins 31g and 31h, as shown in Fig. 3(b), installed on the outer surfaces of the right side walls of the second and third stocker trays 17 and 18 are longer than the pins 31f of the first stocker tray 16. The front pins 31g engage the horizontally elongated holes 25d and 25e, as shown in Fig. 2, formed in the front portion of the right side plate 25 of the sub-frame 13. The rear pins 31h engage the horizontally elongated holes 25d and 25e formed in the rear portion of the side plate 25 and the vertically elongated holes 15c and 15d of the cam plate 15.

Each of the second and third stocker trays 17 and 18 also has installed on the left side thereof the same pins as the pins 31g and 31h as described above.

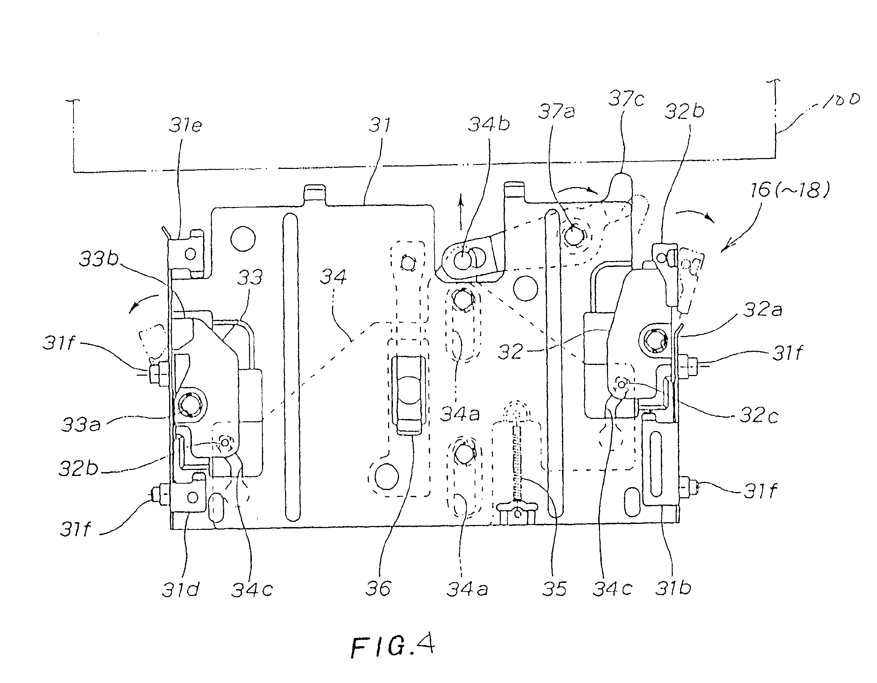

Fig. 4 is a plan view which illustrates the first stocker tray 16. In the drawing, the right lock lever 32 is rotatable clockwise about the hole 32a, the left lock lever 33 is rotatable counterclockwise about the hole 33a, the slide plate 34 is movable toward the minidisk reproduction device 100, and the release lever 37 is rotatable clockwise.

In operation, when the first stocker tray 16 holding the MD cartridge 150 is moved from the standby position to the loading position, as will be described later in detail, the extension 37c of the release lever 37 is brought into contact with the minidisk reproduction device 100, thereby causing the release lever 37 to be rotated clockwise, which rotation, in turn, causes the slide plate 34 connected to the release lever 37 to be moved toward the minidisk reproduction device 100. The movement of the slide plate 34 causes the right and left lock levers 32 and 33 to swing outward of the first stocker tray 16, so that the hooks 32b and 33b are moved out of engagement with the MD cartridge 150, thereby allowing the MD cartridge 150 to be loaded into the minidisk reproduction device 100.

The second and third stocker trays 17 and 18 operate in the same manner as described above, and explanation thereof in detail will be omitted here.

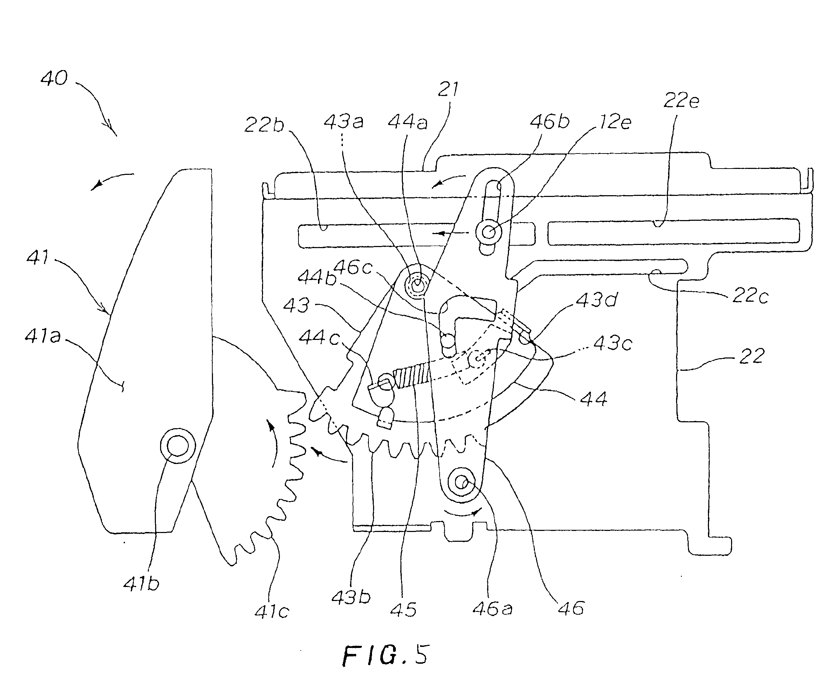

Fig. 5 shows the side of the door unit 40.

The door unit 40 includes the door 41 pivotably mounted on a front panel (not shown), the fan-shaped gear 43 pivotably mounted on the outer surface of the right chassis 22 for opening and closing the door 41, and the drive lever 46 connected to the gear 43 through the transmission lever 44 and the tension spring 45.

The door 41 consists of the door body 41a, the right and left pivots 41b (only one is shown) supported by the front panel, and a half-moon gear 41c meshing with the fan-shaped gear 43.

The fan-shaped gear 43 has the hole 43a for pivotal attachment to the outer surface of the right chassis 22, the gear 43b for meshing with the half-moon gear 41c, the support 43c retaining an end of the tension spring 45, and the stopper 43d for controlling the movement of the transmission lever 44.

The transmission lever 44 has the hole 44a for pivotal attachment to the outer surface of the right chassis 22 through the fan-shaped gear 43, the pin 44b engaging the cam groove 46c of the drive lever 46, and the support 44c retaining the end of the tension spring 45.

The drive lever 46 has the hole 46a for pivotal attachment to the outer surface of the right chassis 22, the elongated hole 46b into which the pin 12e of the base frame 12 (see Fig. 2) is inserted, and the cam groove 46c into which the pin 44b of the transmission lever 44 is inserted.

In operation, when the pin 12e of the base frame 12 moves forward (i.e., the left in the drawing), it will cause the drive lever 46 to be rotated counterclockwise about the hole 46a, so that the pin 44b of the transmission lever 44 moves from a vertically extending portion to a horizontally extending portion of the cam groove 46c to swing the fan-shaped gear 43 about the hole 43a through the tension spring 45. The fan-shaped gear 43 meshes with the half-moon gear 41c to open the door 41 along with the forward movement of the first to third stocker trays 16 to 18, as clearly shown in Fig. 1. The tension spring 45 serves as a safety device when the door 41 is moved by a hand of a user. After the door 41 is opened fully, the fan-shaped gear 43 and the transmission lever 44 remain stopped while the pin 44b of the transmission lever 44 moves along the horizontally extending portion of the cam groove 46c.

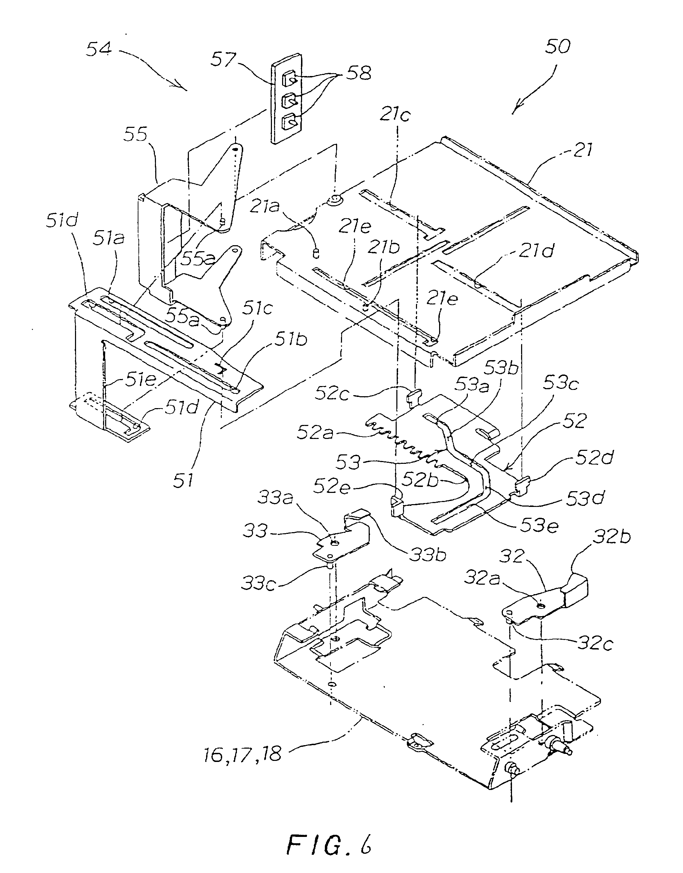

Fig. 6 shows the loading error detecting mechanism 50.

The loading error detecting mechanism 50 includes the shutter 51 slidable in a direction perpendicular to the loading/unloading direction of the MD cartridge 150 along an upper front portion of the upper chassis 21, the drive plate 52 slidably supported on the reverse surface of the upper chassis 21, the switch unit 54 for detecting the presence of the MD cartridges 150 within the first to third stocker trays 16 to 18, and the right and left lock levers 32 and 33, as shown in Fig. 3(a), mounted on the first to third stocker trays 16 to 18.

The shutter 51 includes slide grooves 51a and 51b, the L-shaped slit 51c, the cam grooves 51d, and the shutter body 51e. The slide grooves 51a and 51b receive the pins 21a and 21b of the upper chassis 21 for guiding lateral movement of the shutter 51. Into the L-shaped slit 51c, the L-shaped protrusion 52e formed on the upper surface of the drive plate 52 is fitted through the groove 21e of the upper chassis 21. The cam grooves 51d receive the upper and lower pins 55a installed on upper and lower walls of the switch frame 55 of the switch unit 54. The shutter body 51e extends vertically and has the length corresponding to the total thickness of the first to third stocker trays 16 to 18.

The shutter 51 is, as will be described later in detail, designed to detect errors in loading the MD cartridges 150 into the first to third stocker trays 16 to 18 and to cover the backs of the MD cartridges 150 partially when the MD cartridges 150 have been loaded into the first to third stocker trays 16 to 18 at a correct orientation for avoiding additional loading of new ones.

The drive plate 52 has the rack 52a, the cut-out portion 52b for avoiding the interference with the drive gear 64, as shown in Figs. 1, 2, and 7, the cam groove 53 into which the pin 12b of the base frame 12 is inserted, the guide protrusions 52c and 52d engaging the grooves 21c and 21 d formed in the upper chassis 21, and the L-shaped protrusion 52e engaging the L-shaped slit 51 c of the shutter 51. The rack 52a extends substantially perpendicular to the rack 12a of the base frame 12 and meshes with the drive gear 64 installed on the reverse surface of the upper chassis 21.

The cam groove 53 consists of five consecutive sections: the first straight section 53a, the first slant section 53b, the second straight section 53c extending in parallel to the first straight section 53a, the second slant section 53d, and the third straight section 53e extending substantially perpendicular to the first and second straight sections 53a and 53c.

The switch unit 54 consists of the frame 55 installed on the left side of the upper chassis 21 pivotably within a given angular range and three switches 58 attached to the frame 55 through the base plate 57. The switches 58 detect the presence of the MD cartridges 150 within the first to third stocker trays 16 to 18, respectively.

Fig. 7 shows the drive mechanism 60 designed to move the base frame 12 longitudinally of the chassis 11 of the stocker mechanism 10 and to move the shutter 51 of the loading error detecting mechanism 50 laterally.

The pivotal movement of the first to third stocker trays 16 to 18 relative to the base frame 12 and lateral movement of the shutter 51 of the loading error detecting mechanism 50 will be described later, and explanation thereof in detail will be omitted here.

The drive mechanism 60 includes a gear train consisting of the input gear 61a, the first and second intermediate gears 62 and 63, and the drive gear 64, the rack 12a installed, as already described, on the upper surface of the base frame 12, and the drive plate 52 that is also the part of the loading error detecting mechanism 50.

The input gear 61a is supported by the bracket 61, as shown in Fig. 2, and connected to an electric motor (not shown) to transfer motor torque to the drive gear 64 through the first and second intermediate gears 62 and 63.

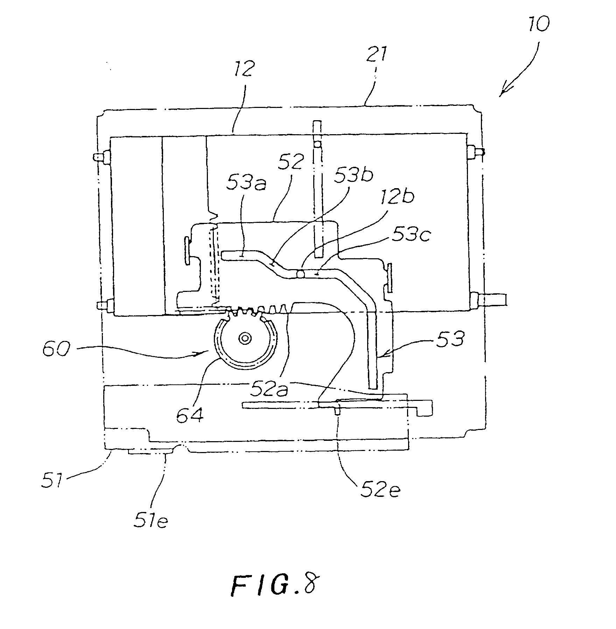

The operation of the drive mechanism 60 will be discussed below with reference to Figs. 8 to 12.

Fig. 8 illustrates an neutral position of the drive mechanism 60 wherein the drive gear 64 is at rest, and the first to third stocker trays 16 to 18 of the stocker mechanism 10 are in the standby position. Specifically, the first to third stocker trays 16 to 18 are oriented parallel to the base frame 12 with the front open ends facing forward.

The drive gear 64, as clearly shown in the drawing, meshes with the rack 52a of the drive plate 52. The pin 12b of the base frame 12 lies within the second straight section 53c of the cam groove 53 formed in the drive plate 52. The base frame 12 and the first to third stocker trays 16 to 18 are, therefore, placed in the rearmost position defined slightly ahead of the rear end of the upper chassis 21.

The shutter body 51e of the shutter 51 connected to the L-shaped protrusion 52e of the drive plate 52, as will be described later in detail, covers the front open ends of the first to third stocker trays 16 to 18 partially.

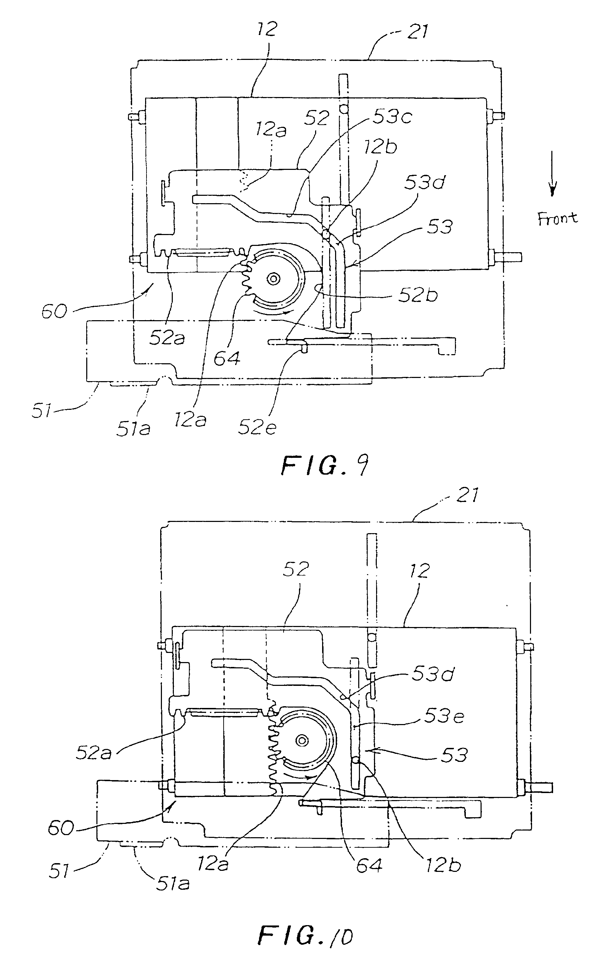

Fig. 9 illustrates a position of the drive mechanism 60 following the initial position shown in Fig. 8 wherein the drive mechanism 60 moves the first to third stocker trays 16 to 18 forward from the standby position through counterclockwise rotation of the drive gear 64.

When the drive gear 64 is rotated counterclockwise, it moves the rack 52a of the drive plate 52 to the left. Immediately before moved out of mesh with the track 52a, the drive gear 64 meshes with the rack 12a of the base plate 12 shown in Fig. 2. Subsequently, the drive gear 64 is moved out of mesh with the rack 12a and enters the cut-out portion 52b of the drive plate 52, thereby causing the pin 12b of the base frame 12 to move from the second straight section 53c toward the second slant section 53d of the cam groove 53 formed in the drive plate 52. When the pin 12b reaches the second slant section 53d of the cam groove 53, the base frame 12 starts to move forward through mesh of the drive gear 64 with the rack 12a of the base plate 12. Specifically, the second slant section 53d of the cam groove 53 switches the drive gear 64 from mesh with the rack 52a of the drive plate 52 to mesh with the rack 12a of the base plate 12. In other words, the second slant section 53d serves to switch the transmission of torque of the drive gear 64 from the drive plate 52 to the base plate 12 so that the lateral movement of the drive plate 52 is terminated, and longitudinal movement of the base plate 12 is initiated.

The shutter 51 is moved laterally through the lateral movement of the drive plate 52.

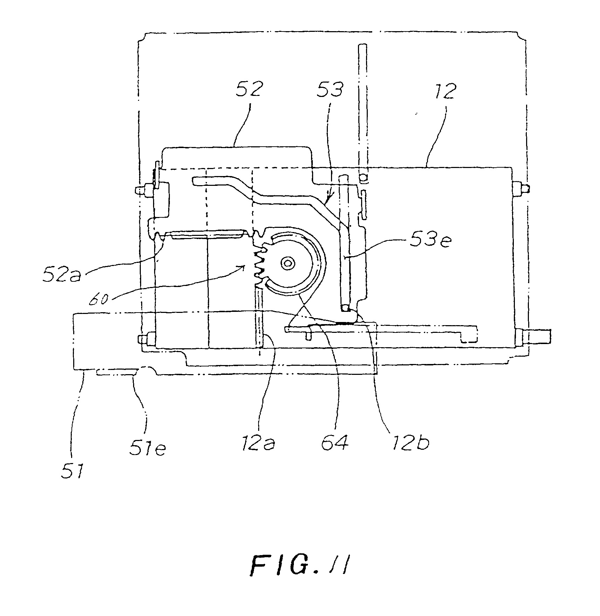

Fig. 10 illustrates a position of the drive mechanism 60 following the position shown in Fig. 9.

When the drive gear 64 is further rotated counterclockwise, it moves the base frame 12 forward through the rack 12a, thereby causing the pin 12b of the base frame 12 to proceed from the second slant section 53d to the third straight section 53e of the cam groove 53. The drive plate 52 is moved to and kept at the leftmost position, so that the shutter 51e of the shutter 51 connected to the drive plate 52 opens the front ends of the first to third stocker trays 16 to 18 fully for allowing the loading of the MD cartridges 150.

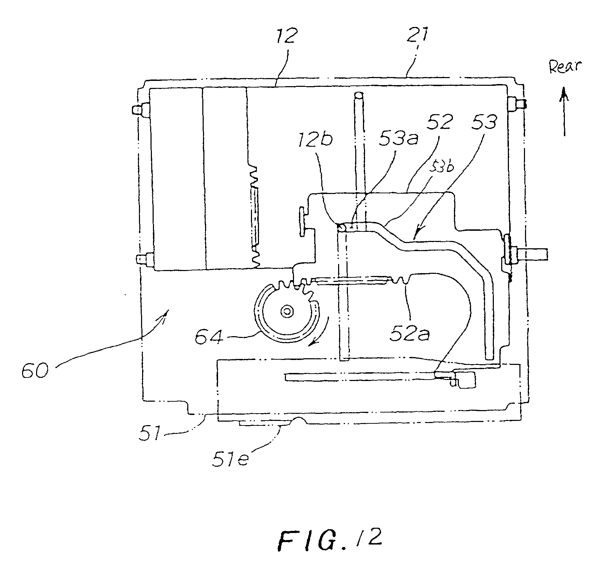

Fig. 11 illustrates a position of the drive mechanism 60 following the position shown in Fig. 10 wherein the first and third stocker trays 16 to 18 reach the cartridge loading/unloading position and project from the chassis 11.

When the drive gear 64 continues to be rotated counterclockwise, it further moves the base frame 12 forward through the rack 12a from the position shown in Fig. 10. When the pin 12b of the base frame 12 reaches the front end of the third straight section 53e of the cam groove 53 formed in the drive plate 52, it will cause the base frame 12 to stop at the cartridge loading/unloading position where the MD cartridges 150 are to be loaded into or unloaded from the first to third stocker trays 16 to 18.

The shutter body 51e of the shutter 51 connected to the drive plate 52 is kept at the leftmost position and continues to open the front ends of the first to third stocker trays 16 to 18 fully.

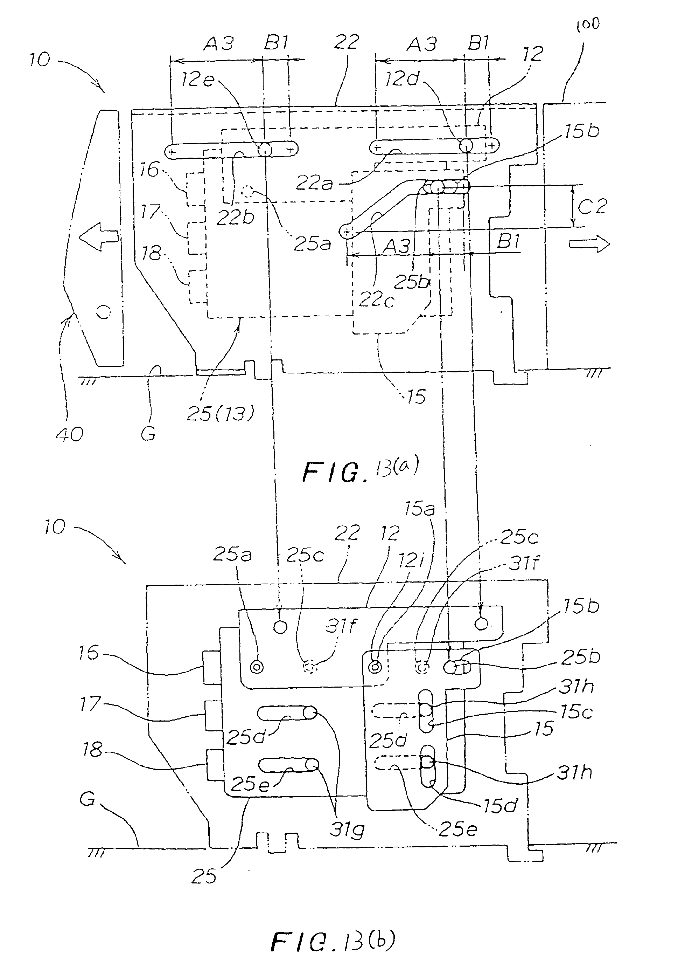

Fig. 12 illustrates the loading position of the first to third stocker trays 16 to 18 which allows the MD cartridges 150 to be withdrawn or loaded from the first to third stocker trays 16 to 18 into the minidisk reproduction device 100.

After the MD cartridges 150 are loaded into the first to third stocker trays 16 to 18 at the cartridge loading/unloading position, the drive gear 64 of the drive mechanism 60 is reversed or rotated clockwise. The base frame 12 returns back to the standby position together with the first to third stocker trays 16 to 18 and moves backward of the upper chassis 21.

When the base frame 12 returns back to the standby position, the pin 12b of the base frame 12 engages the second straight section 53c of the cam groove 53, so that the drive gear 64 meshes with the rack 52a of the drive plate 52 again. The further clockwise rotation of the drive gear 64 causes the drive plate 52 to be moved to the right, so that the pin 12b of the base frame 12 travels along the first slant section 53b and the first straight section 53a of the cam groove 53, thereby causing the base frame 12 to be moved behind the standby position.

The shutter body 51e of the shutter 51 moves laterally through the lateral movement of the drive plate 52 and partially covers the rear ends of the MD cartridges 150 loaded into the first to third stocker trays 16 to 18.

The operation of the stocker mechanism 10 will be discussed below with reference to Figs. 13(a) to 17(b).

Figs. 13(a) and 13(b) both illustrate an initial position of the stocker mechanism 10 wherein the drive mechanism 60 is in the neutral position shown in Fig. 8, and the first to third stocker trays 16 to 18 are in the standby position within the chassis 11 and hold no MD cartridges 150. Fig. 13(a) illustrates the stocker mechanism 10 as viewed from the side of the right side chassis 22. Fig. 13(b) omits the right side chassis 22.

The pins 12d and 12e installed on the base frame 12 are movable forward along the grooves 22a and 22b formed in the right side chassis 22 by the distance A3 to slide the base frame 12 from the standby position toward the door unit 40 and also movable rearward by the distance B 1 to slide the base frame 12 from the standby position toward the minidisk reproduction device 100. The distance A3 is longer than the distance B 1.

The pin 25b installed on a rear portion of the right side plate 25 is inserted into the cam groove 22c of the base frame 12 through the elongated hole 15b of the cam plate 15 so as to be slidable along the cam groove 22c forward by the distance A3 and downward (i.e., toward the mount wall G of the chassis 11) by the distance C2 to swing the sub-frame 13 clockwise about the pin 25a installed on the front portion of the right side plate 25.

Fig. 13(b) shows the base frame 12, the sub-frame 13, the cam plate 15, and the first to third stocker trays 16 to 18 in the standby position.

The cam plate 15 is pivotably supported by the base frame 12 through the fit of the pivot 12i of the base frame 12 into the hole 15a of the cam plate 15. The cam plate 15 has, as described above, formed therein the laterally elongated hole 15b and the vertically elongated holes 15c and 15d. The pin 25b of the right side plate 25 of the sub-frame 13 passes through the laterally elongated hole 15b and enters the cam groove 22c of the base frame 12. The pins 31h installed on the rear portion of the second and third stocker trays 17 and 18 pass through the laterally elongated holes 25d and 25e of the right side plate 25 and enter the vertically elongated holes 15c and 15d of the cam plate 15. This allows the cam plate 15 to be rotated clockwise about the pivot 12i through movement of the pin 25b along the cam groove 22c of the base frame 12.

The first stocker tray 16 has the pins 31f fitted into the holes 25c of the right side plate 25 of the sub-frame 13 and is fixed horizontally on the upper inner wall of the right side plate 25.

The second and third stocker trays 17 and 18 have the front pins 31g inserted into the laterally elongated holes 25d and 25e of the right side plate 25 of the sub-frame 13 and the rear pins 31h, as described above, inserted into the laterally elongated holes 25d and 25e of the right side plate 25 and the vertically elongated holes 15c and 15d of the cam plate 15 so that they can move in parallel to the first stocker tray 16 and rotate about the pin 25a of the base frame 12 through the sub-frame 13.

In the standby position, the first to third stocker trays 16 to 18 are, as clearly shown in Fig. 13(b), lapped over one another with the front ends thereof being aligned with a line extending perpendicular to the mount wall G.

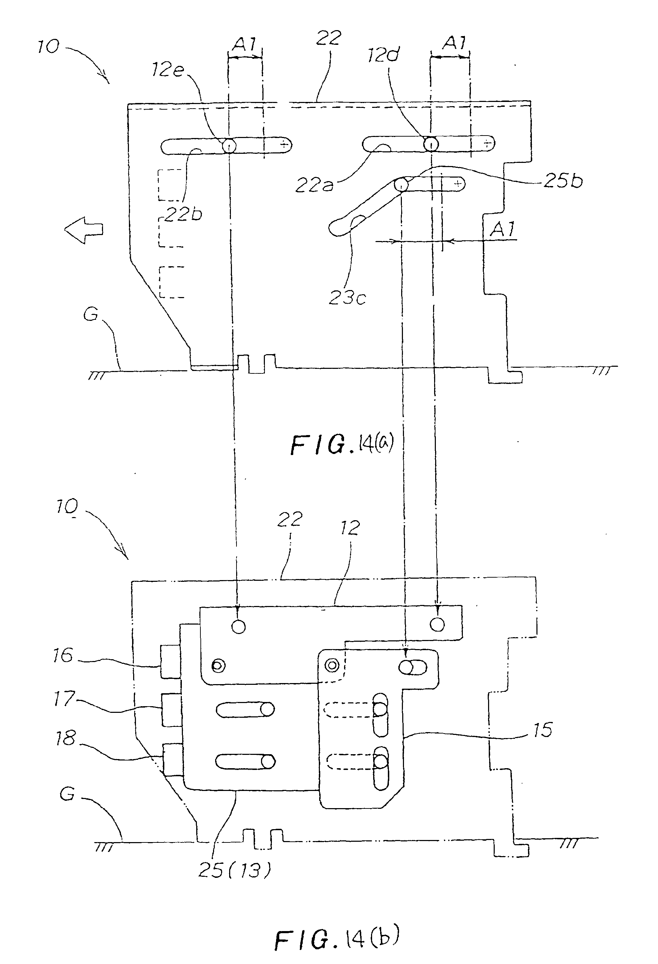

Figs. 14(a) and 14(b) both illustrate a position of the stocker mechanism 10 wherein the drive gear 64 of the drive mechanism 60 rotates, as shown in Fig. 9, to move the base frame 12 forward, as indicated by a white arrow in Fig. 14(a), from the standby position by the distance A1. Fig. 14(a) illustrates the stocker mechanism 10 as viewed from the side of the right side chassis 22. Fig. 14(b) omits the right side chassis 22.

In Fig. 14(a), the pins 12d and 12e installed on the base frame 12 move forward along the grooves 22a and 22b formed in the right side chassis 22 by the distance Al, so that the pin 25b lies at the front end of a horizontal section of the cam groove 22c. The sub-frame 13, the cam plate 15, and the first to third stocker trays 16 to 18 are, thus, remain unrotated. Specifically, the base frame 12, the sub-frame 13, the cam plate 15, and the first to third stocker trays 16 to 18 are, as shown in Fig. 14(b), oriented in parallel to the mount wall G.

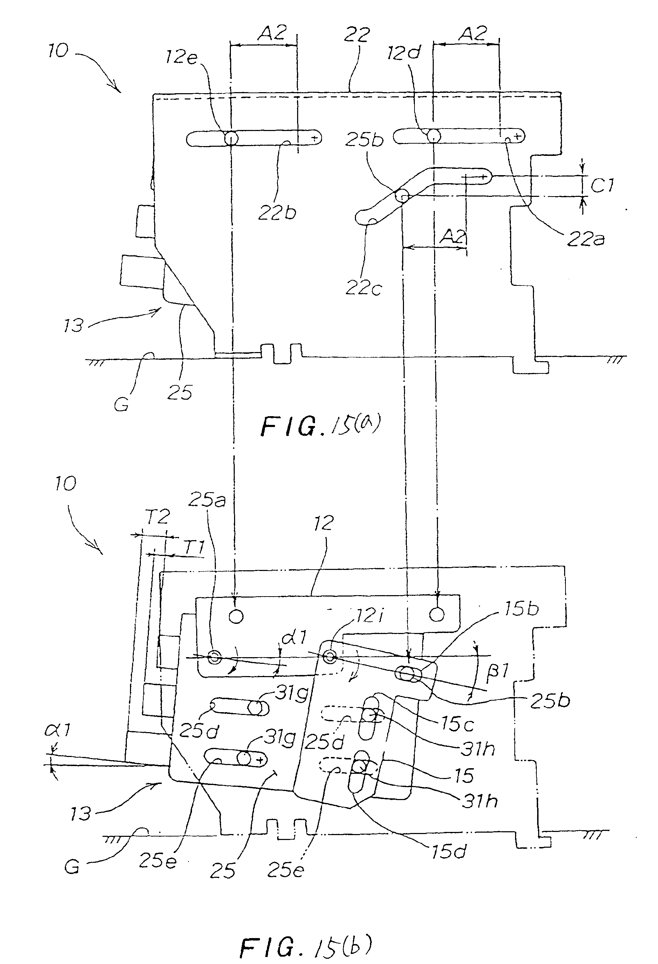

Fig. 15(a) and 15(b) both illustrate a position of the stocker mechanism 10 wherein the base frame 12 is moved forward from the standby position by the distance A2. Fig. 15(a) illustrates the stocker mechanism 10 as viewed from the side of the right side chassis 22. Fig. 15(b) omits the right side chassis 22.

In Fig. 15(a), the pins 12d and 12e installed on the base frame 12 continue to move horizontally along the grooves 22a and 22b of the right side chassis 22, but the pin 25b on the right side plate 25 of the sub-frame 13 enters a slant section of the cam groove 22c and drops by the distance C1, thereby causing the sub-frame 13, the cam plate 15, and the first to third stocker trays 16 to 18 to rotate relative to the base frame 12.

The base frame 12, as clearly shown in Fig. 15(b), remains parallel to the mount wall G, while the sub-frame 13 swings clockwise through an angle α1 about the pivot 25a on the base frame 12, and at the same time, the cam plate 15 swings through an angle β1 about the pivot 12i on the base frame 12.

The swing of the sub-frame 13 causes the first to third stocker trays 16 to 18 to swing upward through the angle α1. The swing of the cam plate 15 thrusts through inner walls of the vertically elongated holes 15c and 15d the rear pins 31h mounted on the second and third stocker trays 17 and 18 forward along the laterally elongated holes 31h in the right side plate 25 of the sub-frame 13, thereby causing the front pins 31g on the second and third stocker trays 17 and 18 to slide along the elongated holes 25d and 25e in the right side plate 25 to thrust the second and third stocker trays 17 and 18 forward by different distances T1 and T2 which are determined as a function of intervals between the pivot 12i of the cam plate 15 and the pins 31h of the second and third stocker trays 17 and 18. The distance T1 is, thus, shorter than the distance T2, so that the third stocker tray 18 projects forwardest.

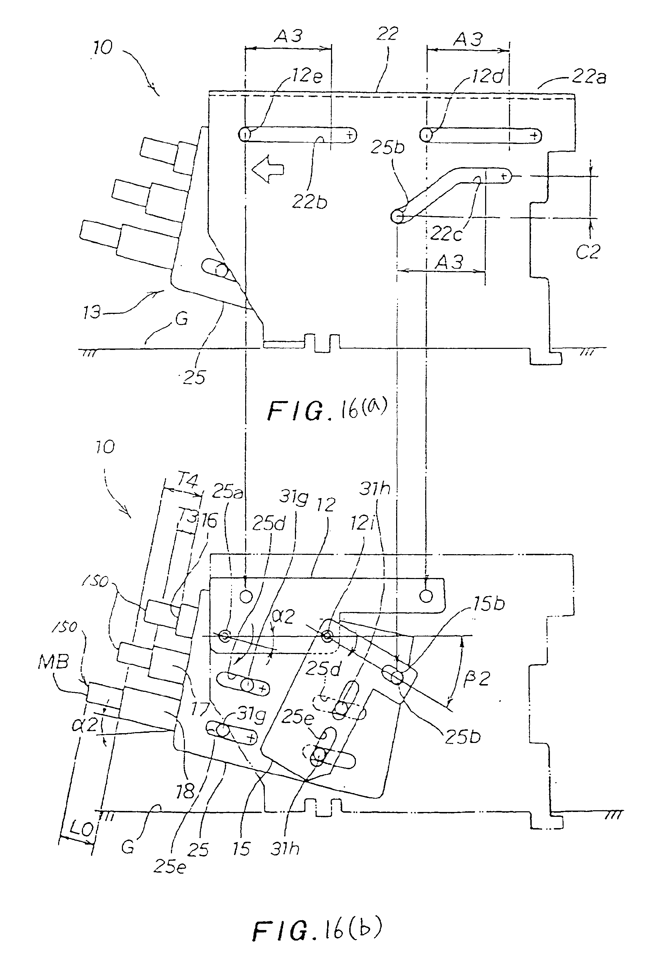

Figs. 16(a) and 16(b) both illustrate the frontmost position of the stocker mechanism 10 wherein the base frame 12 is moved forward from the standby position by the distance A3 and reaches the cartridge loading/unloading position which allows the MD cartridges 150 to be loaded into or unloaded from the first to third stocker trays 16 to 18. Fig. 16(a) illustrates the stocker mechanism 10 as viewed from the side of the right side chassis 22. Fig. 16(b) omits the right side chassis 22.

In Fig. 16(a), the pins 12d and 12e installed on the base frame 12 move forward from the standby position by the distance A3 and reach the front ends of the grooves 22a and 22b of the right side chassis 22. The pin 25b on the right side plate 25 of the sub-frame 13 drops by the distance C2 and reaches the lowermost end of the cam groove 22c.

Specifically, the base frame 12, as clearly shown in Fig. 16(b), remains parallel to the mount wall G, while the sub-frame 13 swings clockwise through an angle α2 about the pivot 25a on the base frame 12, and at the same time, the cam plate 15 swings through an angle β2 about the pivot 12i on the base frame 12.

The swing of the sub-frame 13 through the angle α2 causes the first to third stocker trays 16 to 18 to swing upward through the angle α2. The swing of the cam plate 15 through the angle β2 advances the rear pins 31 h mounted on the second and third stocker trays 17 and 18 along the laterally elongated holes 31h in the right side plate 25 of the sub-frame 13, thereby causing the front pins 31g on the second and third stocker trays 17 and 18 to slide along the elongated holes 25d and 25e in the right side plate 25 to thrust the second and third stocker trays 17 and 18 forward by different distances T3 and T4.

The angle α2 through which the sub-frame 13 is rotated from the standby position is an inclination of the first to third stocker trays 16 to 18 to the mount wall G. The first stocker tray 16 is kept parallel to the upper plate 24 of the sub-frame 13, while the second and third stocker trays 17 and 18 are oriented upward at the angle α2 to the mount wall G with the front ends projecting from that of the first stocker tray 16 by the distances T3 and T4.

When the MD cartridges 150 are loaded into the first to third stocker trays 16 to 18 correctly, the back surfaces MB of the MD cartridges 150 project in a stepwise fashion from the front ends of the first to third stocker trays 16 to 18 by the distance L0, respectively. This allows a user to grasp both sides of each of the MD cartridges 150 by fingers easily when replacing the MD cartridges 150 in the first to third stocker trays 16 to 18.

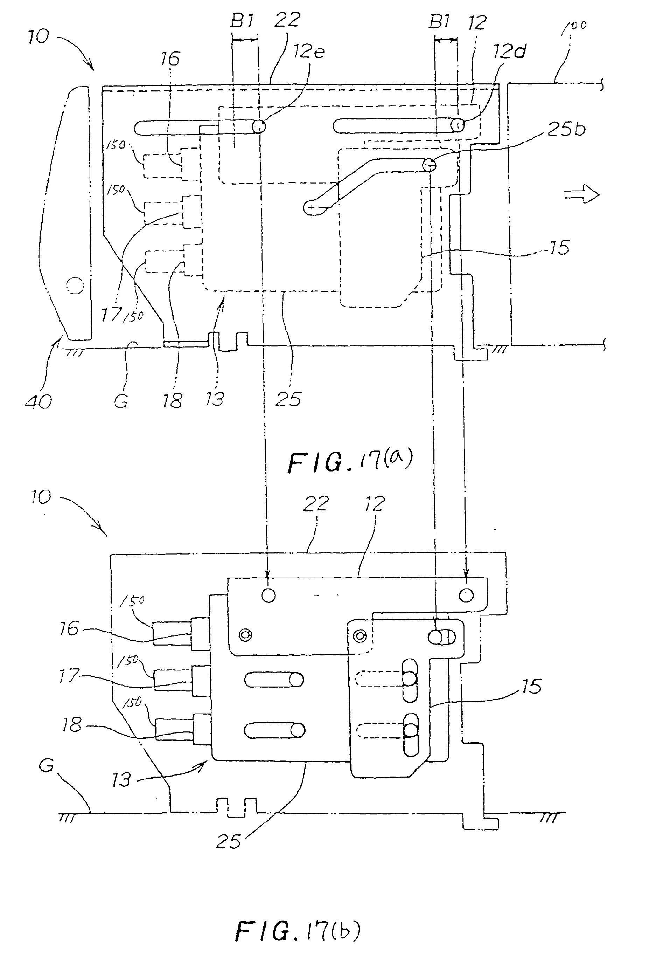

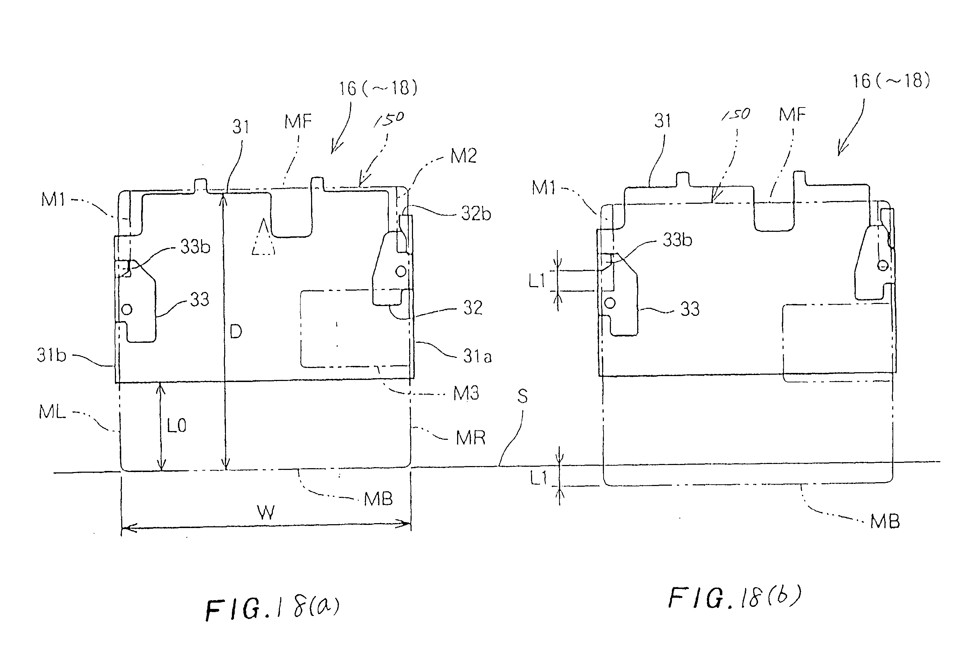

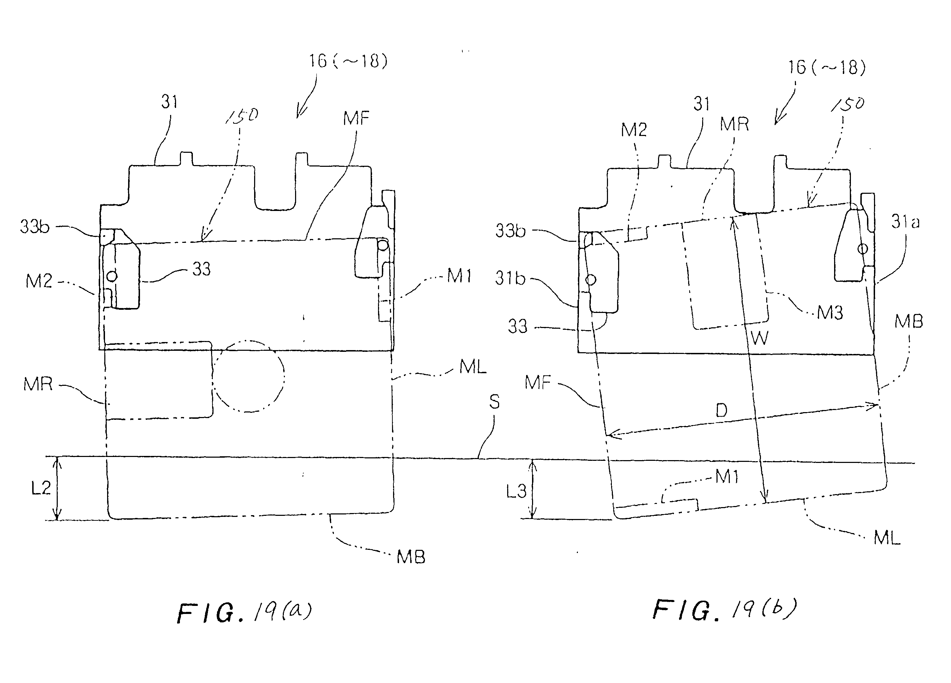

Figs. 17(a) and 17(b) both illustrate the rearmost position of the stocker mechanism 10 wherein the drive gear 64 of the drive mechanism 60 is reversed, as discussed with reference to Fig. 12, after the MD cartridges 150 are loaded into the first to third stocker trays 16 to 18 to move the base frame 12 backward across the standby position to the loading position which allows the MD cartridges 150 to be withdrawn from the first to third stocker trays 16 to 18 into the minidisk reproduction device 100. Fig. 17(a) illustrates the stocker mechanism 10 as viewed from the side of the right side chassis 22. Fig. 17(b) omits the right side chassis 22.

The pins 12d and 12e installed on the base frame 12 are, as shown in Fig. 17(a), moved backward horizontally, as indicated by a white arrow, along the grooves 22a and 22b formed in the right side chassis 22 by the distance B 1 from the standby position shown in Fig. 13(a) and reach the rearmost ends of the grooves 22a and 22b. Similarly, the pin 25b is also moved backward horizontally along the horizontal section of the cam groove 22c by the distance B1 and reaches the rearmost end of the cam groove 22c. The sub-frame 13, the cam plate 15, and the first to third stocker trays 16 to 18, therefore, reach the loading position without being rotated.

The base frame 12, the sub-frame 13, the cam plate 15, and the first to third stocker trays 16 to 18 are, as shown in Fig. 17(b), oriented in parallel to the mount wall G.

The operation of the loading error detecting mechanism 50 will be discussed below with reference to Figs. 18(a) to 23(b).

Figs. 18(a) and 18(b) illustrate the first stocker tray 16 into which the MD cartridge 150 is loaded at a correct orientation.

In Fig. 18(a), M1 indicates a left groove formed in the MD cartridge 150, M2 indicates a right groove in the MD cartridge 150 for moving a shutter M3 thereof, and MF, MB, ML, and MR indicate the front, the back, the left side, and the right side of the MD cartridge 150, respectively.

Standard minidisk cartridges measure 71.4 mm by 68 mm and are marked Δ on upper surfaces indicating the loading direction, but users may not know the presence of the mark Δ and insert the minidisk cartridges into stocker trays at incorrect orientations. The loading error detecting mechanism 50 is provided for detecting such a loading error when the MD cartridge 150 is inserted into one of the first to third stocker trays 16 to 18 at the incorrect orientation.

When the MD cartridge 150 is loaded into, for example, the first stocker tray 16 at the correct orientation, the right and left sides MR and ML of the MD cartridge 150 are, as shown in Fig. 18(a), guided by the guide surfaces 31a and 31b in contact therewith. The MD cartridge 150 collides at the end of the left groove M 1 with the hook 33b of the left lock lever 33 and stops. The back MB of the MD cartridge 150 projects from the front end of the first stocker tray 16 by the distance LO, allowing the user to hold the left and right sides ML and MR of the MD cartridge 150 by fingers. "S" indicates a reference line with which the back MB of the MD cartridge 150 coincides when loaded correctly.

Fig. 18(b) illustrates the MD cartridge 150 which has been loaded into the first stocker tray 16 at the correct orientation, but incompletely. Specifically, the clearance L1 is present between the end of the left groove M1 of the MD cartridge 150 and the hook 33b of the left lock lever 33, resulting in projection of the back MB of the MD cartridge 150 from the reference line by the clearance L1.

Figs. 19(a) and 19(b) illustrate the MD cartridge 150 loaded into the first stocker tray 16 at incorrect orientations.

Fig. 19(a) illustrates the MD cartridge 150 which has been inverted laterally and vertically in error when loaded into the first stocker tray 16. The right groove M2 of the MD cartridge 150 does not agree in height with the hook 33b of the left lock lever 33, so that the MD cartridge 150 stops at the hook 33b, thereby resulting in projection of the back MB of the MD cartridge 150 from the reference line S by the distance L2.

Fig. 19(b) illustrates the MD cartridge 150 which has been turned 90° counterclockwise in error when loaded into the first stocker tray 16. Specifically, the front MF and the back MB of the MD cartridge 150 face the guide surfaces 31 b and 31a of the first stocker tray 16, respectively. Since the depth D (= 58 mm) of the MD cartridge 150 is smaller than the interval between the guide surfaces 31a and 31b, clearances are developed between the right and left sides of the MD cartridge 150 and the guide surfaces 31a and 31b.

Therefore, when the MD cartridge 150 is, as shown in the drawing, loaded diagonally into the first stocker tray 16 with the left groove M2 being oriented laterally, it will cause the MD cartridge 150 to collide at the left groove M2 with the hook 33b of the left lock lever 33 so that it stops at the hook 33b, thus resulting in projection of the left side ML from the reference line S by the distance L3. Even when the MD cartridge 150 is loaded into the first stocker tray 16 in parallel, the left side ML projects from the reference line S.

Fig. 20 illustrates the state of the loading error detecting mechanism 50 when the MD cartridge 150 is being loaded at the correct orientation into, for example, the first stocker tray 16 which is in the cartridge loading/unloading position.

When loaded into the first stocker tray 16, the MD cartridge 150 is guided at the right and left side surfaces MR and ML by the guide surfaces 31a and 31 b of the first stocker tray 16. The shutter body 51e of the shutter 51 lies on the left side of the first stocker tray 16 at an interval δ away from the left side surface ML of the MD cartridge 150. After loaded into the first stocker tray 16 completely, the MD cartridge 150 is moved to the standby position.

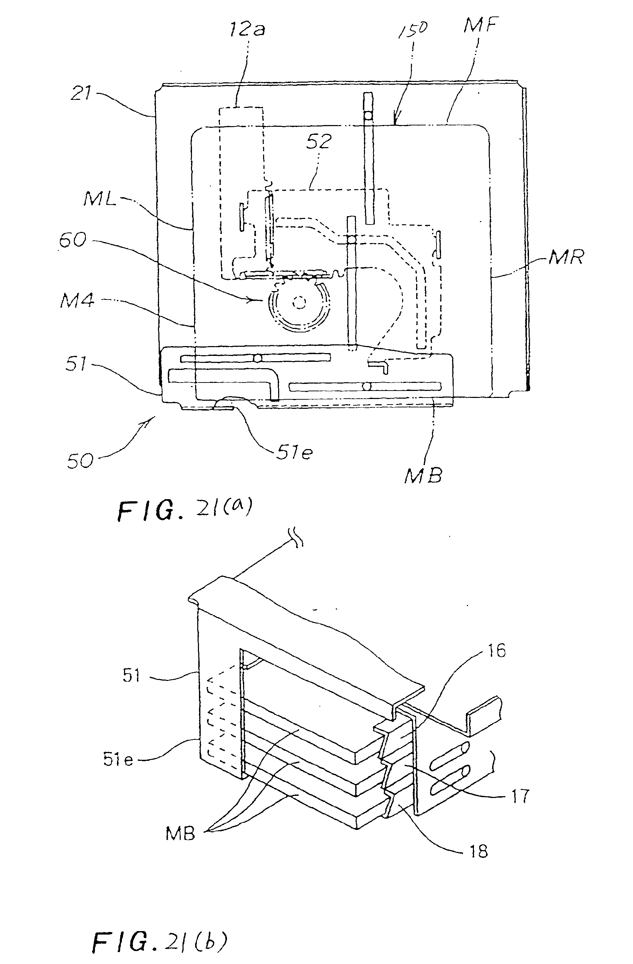

Figs. 21(a) and 21(b) illustrate the state of the loading error detecting mechanism 50 when the MD cartridges 150 reach the standby position after loaded into the first to third stocker trays 16 to 18 correctly.

When the MD cartridges 150 are loaded into the first to third stocker trays 16 to 18 completely, the back MB of each MD cartridge 150, as shown in Fig. 18(a), projects from the front end of corresponding one of the first to third stocker trays 16 to 18 by the distance LO, but it is located behind the shutter 51. Specifically, the distance LO is so determined that the back MB of each MD cartridge 150 does not interfere with the shutter 51. Thus, when the shutter 51 is moved right, as viewed in the drawings, it covers the back MB of each MD cartridge 150 partially with a given clearance, thereby avoiding additional loading of MD cartridges into the first to third stocker trays 16 to 18.

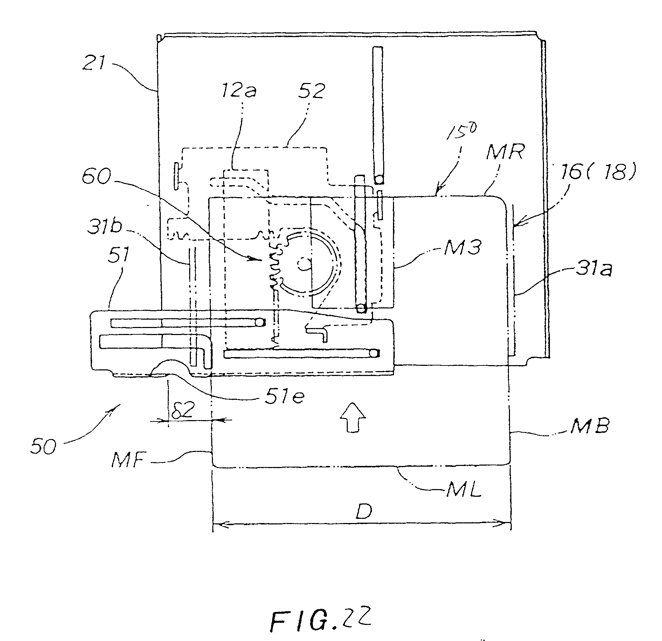

Fig. 22 illustrates the state of the loading error detecting mechanism 50 when the MD cartridge 150 is turned 90° counterclockwise in error and loaded into the first stocker tray 16 with the front MF and the back MB of the MD cartridge 150 facing the guide surfaces 31b and 31a of the first stocker tray 16, respectively.

For example, when the back MB of the MD cartridge 150 is brought close to the right guide surface 31a of the first stocker tray 16, the shutter body 51e of the shutter 51 is located at the leftmost position at an interval δ2 away from the front MF of the MD cartridge.

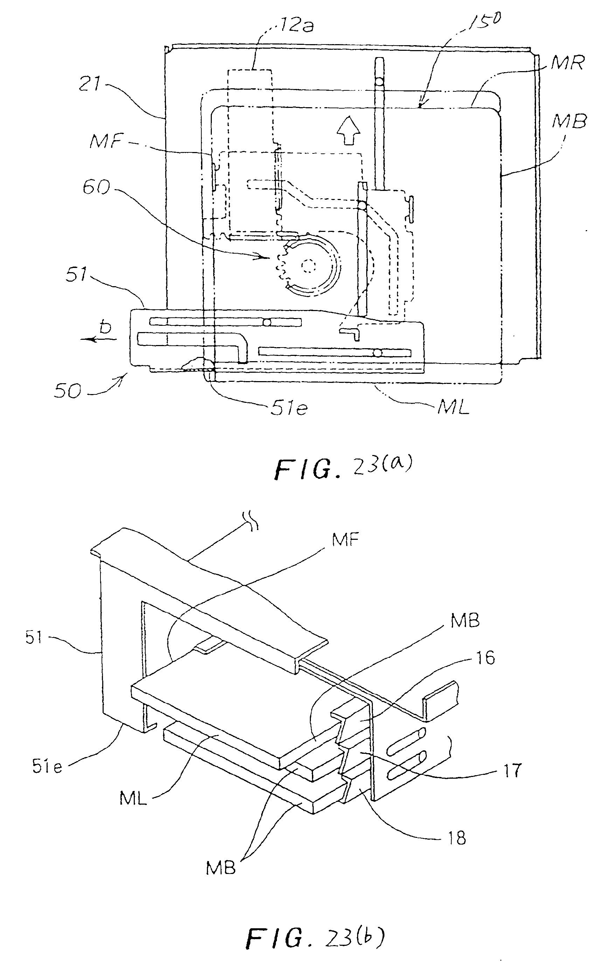

Figs. 23(a) and 23(b) illustrate the state of the loading error detecting mechanism 50 when the MD cartridges 150 reach the standby position after one of the MD cartridge 150 is loaded into the first stocker tray 16 at the incorrect orientation shown in Fig. 22.

The left side ML of the MD cartridge 150 loaded into the first stocker tray 16, as shown in Fig. 19(b), projects from the reference line S. When the shutter 51 is, thus, moved right, it will cause the shutter body 51e to collide with the front MF of the MD cartridge 150 in the first stocker tray 16 so that it stops. This results in an increase in load of the electric motor of the drive mechanism 60, which may be detected by monitoring an overcurrent flowing through the electric motor. Therefore, when such an overcurrent is detected, it may be determined that at least one of the MD cartridges 150 has been loaded into corresponding one of the first to third stocker trays 16 to 18 at an incorrect orientation. The removal of the MD cartridge loaded at the incorrect orientation is achieved easily by reversing the shutter 51 through a control circuit (not shown).

While the present invention has been disclosed in terms of the preferred embodiment in order to facilitate a better understanding thereof, it should be appreciated that the invention can be embodied in various ways without departing from the principle of the invention. Therefore, the invention should be understood to include all possible embodiments and modification to the shown embodiments which can be embodied without departing from the scope of the appended claims.

A stocker apparatus for storage media such as minidisk cartridges is provided which includes a stocker tray moving mechanism designed to move stocker trays between a neutral and a storage medium loading/unloading position together. In the neutral position, the stocker tray moving mechanism lays the stocker trays to overlap each other with storage medium loading/unloading openings being aligned vertically. In the storage medium loading/unloading position, the stocker tray moving mechanism shifts the stocker trays laterally by different distances so as to orient the storage medium loading/unloading openings diagonally upward for facilitating ease of manual loading and unloading of each storage medium into and from corresponding one of the stocker trays.

## Claims

1. A stocker apparatus (1) for storage media (150) comprising:
a plurality of stocker trays (16, 17, 18) for stocking therein storage media (150), respectively, each of said stocker tray (16, 17, 18) having a storage medium loading/unloading opening; and
a stocker tray moving mechanism designed to move said stocker trays (16, 17, 18) between a first and a second position together,
**characterized in that**
in the first position, the stocker tray moving mechanism laying said stocker trays so as to overlap each other with the storage medium loading/unloading openings being aligned substantially perpendicular to a reference plane (G), in the second position, the stocker tray moving mechanism shifting the stocker trays laterally by different distances so as to orient the storage medium loading/unloading openings upward in alignment with a diagonal line extending at a given angle to the reference plane for loading and unloading the storage media (150) into and from said stocker trays (16, 17, 18).

2. A stocker apparatus according to claim 1, wherein said stocker tray moving mechanism includes a chassis (11), a base frame (12), a sub-frame (13), a cam groove (22c), and a cam plate (15), the base frame (12) being installed on the chassis (11) so as to be movable substantially parallel to the reference plane (G), the sub-frame (13) being mounted pivotably on the base frame (12) and retaining said stocker trays (16, 17, 18) to overlap each other vertically, the cam groove (22c) being formed in the chassis (11) along which a cam follower (25b) connecting with the sub-frame (13) moves to swing the sub-frame (13) relative to the base frame (12) according to movement of the base frame (12) substantially parallel to the reference plane (G), the cam plate (15) being supported pivotably by a pivot installed on the base frame (12) and thrusting said stocker trays (16, 17, 18) laterally from the sub-frame (13) by the different distances which are determined as a function of intervals between the pivot on the base frame (12) and said stocker trays (16, 17, 18).

3. A stocker apparatus according to claim 2, further comprising a door (40) which opens and closes a storage medium loading/unloading openings of the chassis (11) selectively according to the movement of the base frame (12).

4. A stocker apparatus according to claim 1, wherein:
each of the stocker trays being designed to receive the storage media (150) inside a reference line (S) when the storage media (150) is loaded at a correct orientation, and to project an end portion of the storage media (150) from the reference line when the storage media (150) is loaded at an incorrect orientation; and
wherein a shutter (51) is provided to be movable between a first and a second shutter position in a direction substantially perpendicular to the loading/unloading direction of the storage media (150), in the first shutter position, said shutter (51) lying at a given interval away from the storage media (150) without interfering with loading and unloading of the storage media (150) into and from said stocker trays (16, 17, 18), in the second shutter position, said shutter (51) covering the end portions of the storage media (150) at least partially when all the storage media (150) are loaded into said stocker trays (16, 17, 18) at the correct orientation and colliding with the end portion of at least one of the storage media (150) projecting from the reference line (S) when the at least one storage medium (150) is loaded into corresponding one of said stocker trays (16, 17, 18) at the incorrect orientation.

5. A stocker apparatus according to claim 4, wherein said stocker tray moving mechanism includes a cam mechanism which moves the stocker trays (16, 17, 18) and said shutter (51).

6. A stocker apparatus according to claim 4, wherein said shutter (51) covers the end surfaces of the storage media (150) at least partially when all the storage media (150) are loaded into said stocker trays (16, 17, 18) at the correct orientation for avoiding additional loading of storage media (150).

7. A stocker apparatus according to any of the preceding claims, wherein the storage media (150) are cartridges.

## Patentansprüche

1. Lagergerät (1) für Speichermedien (150), mit:
einer Vielzahl von Lagerschächten (16, 17, 18) zum jeweiligen Lagern von Speichermedien (150) darin, wobei jeder der Lagerschächte (16, 17, 18) eine Speichermediumbelade-/Entladeöffnung hat; und
einem Lagerschachtbewegungsmechanismus, der dazu gestaltet ist, die Lagerschächte (16, 17, 18) zusammen zwischen einer ersten und einer zweiten Stellung zu bewegen,
**dadurch gekennzeichnet, dass**
der Lagerschachtbewegungsmechanismus in der ersten Stellung die Lagerschächte so übereinander legt, dass sie miteinander überlappen, wobei die Speichermediumbelade-/Entladeöffnungen im Wesentlichen senkrecht zu einer Referenzebene (G) ausgerichtet sind, wobei der Lagerschachtbewegungsmechanismus die Lagerschächte in der zweiten Stellung seitlich um unterschiedliche Abstände verschiebt, um so die Speichermediumbelade-/Entladeöffnungen zum Beladen und Entladen der Speichermedien (150) in die und von den Lagerschächten (16, 17, 18) in Ausrichtung mit einer diagonalen Linie, die sich bei einem gegebenen Winkel zu der Referenzebene erstreckt, aufwärts zu bewegen.

2. Lagergerät gemäß Anspruch 1, wobei der Lagerschachtbewegungsmechanismus ein Fahrgestell (11), einen Basisrahmen (12), einen Sub-Rahmen (13), eine Nockennut (22c) und eine Nockenplatte (15) aufweist, wobei der Basisrahmen (12) an dem Fahrgestell (11) installiert ist, so dass er im Wesentlichen parallel zu der Referenzebene (G) beweglich ist, wobei der Sub-Rahmen (13) schwenkbar an dem Basisrahmen (12) montiert ist und die Lagerschächte (16, 17, 18) so hält, dass sie einander vertikal überlappen, wobei in dem Fahrgestell (11) die Nockennut (22c) ausgebildet ist, entlang der sich ein mit dem Sub-Rahmen (13) verbindender Nockenmitnehmer (25b) bewegt, um den Sub-Rahmen (13) relativ zu dem Basisrahmen (12) gemäß der im Wesentlichen zu der Referenzebene (G) parallelen Bewegung des Basisrahmens (12) zu schwingen, wobei die Nockenplatte (15) schwenkbar durch ein an dem Basisrahmen (12) installiertes Schwenkgelenk gestützt ist und die Lagerschächte (16, 17, 18) von dem Sub-Rahmen (13) seitlich bei den unterschiedlichen Abständen schiebt, die als eine Funktion von Intervallen zwischen dem Schwenkgelenk an dem Basisrahmen (12) und den Lagerschächten (16, 17, 18) bestimmt sind.

3. Lagergerät gemäß Anspruch 2, ferner mit einer Tür (40), die die Speichermediumbelade-/Entladeöffnungen des Fahrwerks (11) wahlweise gemäß der Bewegung des Basisrahmens (12) öffnet und schließt.

4. Lagergerät gemäß Anspruch 1, wobei
jeder der Lagerschächte so gestaltet ist, dass er das Speichermedium (150) innerhalb einer Referenzlinie (S) aufnimmt, wenn das Speichermedium (150) bei einer korrekten Ausrichtung beladen ist, und so, dass ein Endabschnitt des Speichermediums (150) von der Referenzlinie vorsteht, wenn das Speichermedium (150) bei einer unkorrekten Ausrichtung beladen ist; und
wobei ein (51) so vorgesehen ist, dass er zwischen einer ersten und einer zweiten Schließstellung in einer im Wesentlichen zu der Lade-/Entladerichtung der Speichermedien (150) senkrechten Richtung beweglich ist, wobei der Schließer (51) in der ersten Schließstellung bei einem gegebenen Intervall von dem Speichermedium (150) weg liegt, ohne mit dem Beladen und Entladen des Speichermediums (150) in und von den Speicherschächten (16, 17, 18) in störenden Eingriff zu gelangen, wobei der Schließer (51) in der zweiten Schließstellung die Endabschnitte der Speichermedien (150) zumindest teilweise abdeckt, wenn alle Speichermedien (150) in die Speicherschächte (16, 17, 18) bei der korrekten Ausrichtung beladen sind, und mit dem Endabschnitt zumindest eines der Speichermedien (150), das von der Referenzlinie (S) vorsteht, kollidiert, wenn das zumindest eine Speichermedium (150) in den entsprechenden Lagerschacht (16, 17, 18) bei der unkorrekten Ausrichtung beladen ist.

5. Lagergerät gemäß Anspruch 4, wobei der Lagerschachtbewegungsmechanismus einen Nockenmechanismus aufweist, der die Lagerschächte (16, 17, 18) und den Schließer (51) bewegt.

6. Lagergerät gemäß Anspruch 4, wobei der Schließer (51) die Endflächen der Speichermedien (150) zumindest teilweise bedeckt, wenn alle Speichermedien (150) in die Lagerschächte (16, 17, 18) bei der korrekten Ausrichtung beladen sind, um ein zusätzliches Beladen von Speichermedien (150) zu verhindern.

7. Lagergerät gemäß einem der vorstehenden Ansprüche, wobei die Speichermedien (150) Kassetten sind.

## Revendications

1. Dispositif de stockage (1) de moyens de mémorisation (150) comprenant :
une pluralité de plateaux de stockage (16, 17, 18) pour y stocker des moyens de mémorisation (150), respectivement, chacun desdits plateaux de stockage (16, 17, 18) présentant une ouverture pour le chargement et le déchargement de moyens de mémorisation ; et
un mécanisme de déplacement de plateaux de stockage adapté pour amener lesdits plateaux de stockage (16, 17, 18) à se déplacer, ensemble, entre une première et une deuxième positions ;
**caractérisé en ce que** :
dans la première position, le mécanisme de déplacement de plateaux de stockage agence lesdits plateaux de stockage de telle sorte qu'ils se recouvrent les uns les autres, les ouvertures de chargement et de déchargement de moyens de mémorisation étant alignées sensiblement perpendiculairement à un plan de référence (G) ; dans la deuxième position, le mécanisme de déplacement de plateau de stockage décale les plateaux de stockage latéralement sur des distances différentes de manière à orienter les ouvertures de chargement et de déchargement de moyens de mémorisation vers le haut dans l'alignement avec une ligne diagonale qui s'étend à un angle donné par rapport au plan de référence en vue du chargement et du déchargement de moyens de mémorisation (150) à l'intérieur, et hors, desdits plateaux de stockage (16, 17, 18).

2. Dispositif de stockage selon la revendication 1, dans lequel ledit mécanisme de déplacement de plateaux de stockage comprend un châssis (11), un cadre de base (12), un cadre inférieur (13), une rainure de came (22c), et une plaque à came (15), le cadre de base (12) étant installé sur le châssis (11) de manière à pouvoir se déplacer sensiblement parallèlement au plan de référence (G), le cadre inférieur (13) étant monté de façon pivotante sur le cadre de base (12) et retenant lesdits plateaux de stockage (16, 17, 18) de manière à ce qu'ils se recouvrent les uns les autres verticalement, la rainure de came (22c) étant formée dans le châssis (11) le long de laquelle un suiveur de came (25b) qui est raccordé au cadre inférieur (13) se déplace de manière à faire pivoter le cadre inférieur (13) par rapport au cadre de base (12) en fonction du mouvement du cadre de base (12) sensiblement parallèlement au plan de référence (G), la plaque à came (15) étant supportée de façon pivotante par un pivot qui est installé sur le cadre de base (12) et qui met en butée lesdits plateaux de stockage (16, 17, 18) latéralement par rapport au cadre inférieur (13) sur les distances différentes qui sont déterminées en fonction d'intervalles entre le pivot qui est installé sur le cadre de base (12) et lesdits plateaux de stockage (16, 17, 18).

3. Dispositif de stockage selon la revendication 2, comprenant en outre une porte (40) qui ouvre et qui ferme des ouvertures de chargement et de déchargement de moyens de mémorisation du châssis (11) de façon sélective en fonction du mouvement du cadre de base (12).

4. Dispositif de stockage selon la revendication 1, dans lequel :
chacun des plateaux de stockage est adapté pour recevoir les moyens de mémorisation (150) à l'intérieur d'une ligne de référence (S) lorsque les moyens de mémorisation (150) sont chargés selon une orientation correcte, et pour amener une partie terminale des moyens de mémorisation (150) à se projeter à partir de la ligne de référence lorsque les moyens de mémorisation (150) sont chargés selon une orientation incorrecte ; et
dans lequel un obturateur (51) est prévu pour se déplacer entre une première antenne et une deuxième position d'obturation dans une direction sensiblement perpendiculaire à la direction de chargement et de déchargement des moyens de mémorisation (150) ; dans la première position d'obturation, ledit obturateur (51) étant agencé à un intervalle donné à l'écart des moyens de mémorisation (150) sans gêner le chargement et de déchargement des moyens de mémorisation (150) à l'intérieur, et hors, desdits plateaux de stockage (16, 17, 18) ; dans la
deuxième position d'obturation, ledit obturateur (51) recouvrant les parties d'extrémité des moyens de mémorisation (150) au moins partiellement lorsque tous les moyens de mémorisation (150) sont chargés à l'intérieur desdits plateaux de stockage (16, 17, 18) selon l'orientation correcte, et entrant en collision avec la partie d'extrémité d'au moins un des moyens de mémorisation (150) se projetant à partir de la ligne de référence (S) lorsque le au moins un moyen de mémorisation (150) est chargé à l'intérieur de l'un desdits plateaux de stockage (16, 17, 18) correspondant selon l'orientation incorrecte.

5. Dispositif de stockage selon la revendication 4, dans lequel ledit mécanisme de déplacement de plateaux de stockage comprend un mécanisme à came qui déplace les plateaux de stockage (16, 17, 18) et ledit obturateur (51).

6. Dispositif de stockage selon la revendication 4, dans lequel ledit obturateur (51) recouvre les surfaces d'extrémité des moyens de mémorisation (150) au moins partiellement lorsque tous les moyens de mémorisation (150) sont chargés à l'intérieur desdits plateaux de stockage (16, 17, 18) selon l'orientation correcte afin d'empêcher tout chargement complémentaire de moyens de mémorisation (150).

7. Dispositif de stockage selon l'une quelconque des revendications précédentes, dans lequel les moyens de mémorisation (150) sont des cartouches.
